# EUROPÄISCHE PATENTANMELDUNG

(11) **EP 3 082 003 A1**
(43) Veröffentlichungstag der Anmeldung: **19.10.2016**
(21) Anmeldenummer: 15164108.1
(22) Anmeldetag: 17.04.2015
(51) Int. Cl.: G05B 23/02

(54) **VERFAHREN UND SYSTEM ZUR AUSFÜHRUNG DES VERFAHRENS ZUM AUTOMATISCHEN TESTEN EINER AUTOMATISIERUNGSLÖSUNG**

(71) Anmelder: Siemens Aktiengesellschaft, 80333 München (DE)
(72) Erfinder: Lutz, Benjamin, 76327 Pfinztal (DE); Wolf, Gerrit, 76187 Karlsruhe (DE)

(57) **Zusammenfassung**

Die Erfindung ist ein Verfahren zum automatischen Testen einer in ein Automatisierungssystem (10) geladenen Automatisierungslösung mittels eines Anlagensimulators (18), wobei der Anlagensimulator (18) einen Test-Controller (34) umfasst, wobei der Test-Controller (34) ein zur Nachbildung von Interaktionen eines Operators mit der Automatisierungslösung bestimmtes transaktionales HMI-Modell (36) steuert, wobei das transaktionale HMI-Modell (36) jeweils einen vorgegebenen Testfall (26) verwendet, wobei mittels des Test-Controllers (34) und des transaktionalen HMI-Modells (36) der jeweilige Testfall (26) abgearbeitet wird, wobei ein Steuerungsprogramm als Bestandteil der jeweiligen Automatisierungslösung instrumentierte Funktionsbausteine (38) umfasst und wobei die instrumentierten Funktionsbausteine (38) als Instrumentierung Mittel zur Erfassung einer Testabdeckung während der Abarbeitung des Testfalls (26) umfassen.

## Beschreibung

Die Erfindung betrifft ein Verfahren zum automatischen Testen einer in ein Automatisierungssystem geladenen Automatisierungslösung sowie ein zur Ausführung des Verfahrens bestimmtes und zur Ausführung des Verfahrens eingerichtetes System.

Beim Projektieren oder beim Reengineering einer Automatisierungslösung ist deren Test ein sehr wichtiger, aber gleichzeitig auch zeitaufwendiger und damit kostenintensiver Prozessschritt. Der Test bezieht sich auf zumindest ein Steuerungsprogramm der Automatisierungslösung. Zum Testen eines Steuerungsprogramms sind an sich einerseits die jeweilige Prozessperipherie und andererseits eine Schnittstelle für Bedienhandlungen eines menschlichen Operators notwendig. Speziell eine solche Schnittstelle für Bedienhandlungen eines Operators (HMI-Schnittstelle, Peripherie und Software zum sogenannten Bedienen und Beobachten) steht oft erst zur Verfügung, wenn die Entwicklung des Steuerungsprogramms zu einem großen Teil abgeschlossen ist. Aus diesem Grunde sind bisher Tests einer Automatisierungslösung erst in einem relativ späten Entwicklungsstadium der Automatisierungslösung möglich.

Eine Aufgabe der Erfindung besteht darin, eine Möglichkeit anzugeben, mittels derer das Testen einer Automatisierungslösung bereits in einem relativ frühen Entwicklungsstadium beginnen kann.

Diese Aufgabe wird erfindungsgemäß mittels eines Testverfahrens mit den Merkmalen des Anspruchs 1 gelöst. Dazu ist bei einem Verfahren zum automatischen Testen einer in ein Automatisierungssystem geladenen Automatisierungslösung mittels eines Anlagensimulators Folgendes vorgesehen: Der Anlagensimulator umfasst einen Test-Controller oder dem Anlagensimulator ist ein solcher funktional zugeordnet. Der Test-Controller steuert ein zur Nachbildung von Interaktionen eines Operators mit der Automatisierungslösung bestimmtes transaktionales HMI-Modell. Das transaktionale HMI-Modell verwendet eine vorgegebene Beschreibung eines Testfalls. Diese Beschreibung wird im Folgenden selbst als Testfall bezeichnet und dieser wird mittels des Test-Controllers und des transaktionalen HMI-Modells abgearbeitet. Ein zu testendes Steuerungsprogramm der jeweiligen Automatisierungslösung umfasst instrumentierte Funktionsbausteine. Die instrumentierten Funktionsbausteine umfassen als Instrumentierung Mittel zur Erfassung einer Testabdeckung während der Abarbeitung des Testfalls, zum Beispiel eine Schnittstelle, die es dem Test-Controller ermöglicht, nach einem Test die Abdeckung des von dem Funktionsbaustein umfassten Programmcodes abzufragen. Nach Ablauf des Tests wird anhand der erfassten Testabdeckung mittels des Anlagensimulators automatisch ein Bericht zur Testabdeckung generiert.

Der Vorteil der Erfindung besteht darin, dass der Test automatisch und aufgrund des transaktionalen HMI-Modells bereits zu einem sehr frühen Zeitpunkt durchgeführt werden kann, also zu einem Zeitpunkt, zu dem zur Interaktion mit der Automatisierungslösung projektierte Anlagenbilder zum sogenannten Bedienen und Beobachten der Automatisierung üblicherweise nicht oder noch nicht in ausreichendem Maße zur Verfügung stehen.

Mittels des hier vorgeschlagenen Testverfahrens lässt sich eine kontinuierliche Qualitätssicherung während der Erstellung (Engineering) der jeweiligen Automatisierungslösung erreichen. Eine Möglichkeit zur Kostenreduktion ergibt sich darüber hinaus dadurch, dass das hier vorgeschlagene Testverfahren automatisch und unbeaufsichtigt, also zum Beispiel "über Nacht", ablaufen kann. Aus der Möglichkeit zum kontinuierlichen Testen der Automatisierungslösung resultiert eine erhebliche Zeitersparnis beim abschließenden Test der Automatisierung im Zusammenhang mit der Übergabe an den eigentlichen Betreiber, also eine Zeitersparnis bei als FAT (Factory Acceptance Test) oder SAT (Site Acceptance Test) bezeichneten Tests.

Die im Rahmen des Testverfahrens generierten Berichte zur Codeabdeckung können darüber hinaus als technische Dokumentation der Testergebnisse verwendet werden, wodurch sich für die mit der Erstellung der jeweiligen Automatisierungslösung befassten Fachleute eine erhebliche Reduktion der ansonsten anfallenden "Papierarbeit" ergibt. Schließlich können verwendete Testfälle und im Rahmen des Testverfahrens gegebenenfalls angepasste oder ergänzte Testfälle wieder verwendet werden, also zum Beispiel zum späteren Testen derselben Automatisierungslösung, wenn für diese zum Beispiel ein Reengineering notwendig ist, oder zum Testen einer anderen Automatisierungslösung, die auf gleichen Funktionsbausteinen basiert, was sehr häufig der Fall ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Verfahrens wird nach Abschluss der Abarbeitung des jeweiligen Testfalls automatisch ein Bericht zur erreichten Testabdeckung generiert. Die automatische Generierung eines Berichts oder - bei einer sukzessiven Abarbeitung mehrerer Testfälle - mehrerer Berichte gewährleistet eine lückenlose Dokumentation der Ergebnisse des Testverfahrens.

Bei einer weiteren Ausführungsform des Verfahrens wird der Bericht zur erreichten Testabdeckung auf Basis von aus dem Automatisierungssystem ausgelesenen Daten generiert. Dafür ist zum Beispiel vorgesehen, dass als Instrumentierung eines Funktionsbausteins sowie als Mittel zur Ermittlung einer Testabdeckung ein Zähler sowie eine Anweisung zum Inkrementieren des Zählers fungieren und dass der Zähler bei jedem die Anweisung einschließenden Durchlauf des instrumentierten Funktionsbausteins inkrementiert wird. Solche Zählerstände lassen sich mittels des Anlagensimulators oder des Test-Controllers des Anlagensimulators in an sich bekannter Art und Weise automatisch auslesen und ebenso automatisch für einen Bericht zur Testabdeckung aufbereiten.

Bei einer nochmals weiteren Ausführungsform des Verfahrens ist der oder jeder im Rahmen der Instrumentierung eines Funktionsbausteins vorgesehene Zähler in einem jeweiligen Instanz-Datenbaustein des jeweiligen instrumentierten Funktionsbausteins angelegt. Dies erleichtert eine Zuordnung der zur Erfassung der jeweiligen Codeabdeckung eines Funktionsbausteins vorgesehenen Zähler zu jeweils genau einem Funktionsbaustein.

Bei einer besonderen Ausführungsform des Verfahrens wird eine Anweisung zum Inkrementieren des Zählers nur bei der Abarbeitung eines Testfalls ausgeführt. Dafür kann zum Beispiel im Rahmen der Anweisung der Wert einer als "flag" fungierenden Variable abgefragt werden. Diese Variable wird bei der Ausführung des Verfahrens auf einen ersten vorgegebenen oder vorgebbaren Wert gesetzt und bei einer Ausführung des Steuerungsprogramms beim normalen Betrieb, also außerhalb des Testverfahrens, auf einen anderen Wert gesetzt, so dass eine Testsituation und ein Normalbetrieb automatisch und eindeutig unterscheidbar sind.

Bei einer weiteren Ausführungsform des Testverfahrens umfasst und/oder ermöglicht ein Testfall, insbesondere mittels eines zugehörigen Testfallskripts, eine Variation von darin definierten Testwerten. Auf diese Weise kann der Test mittels eines Testfalls auf Basis einer Vielzahl von Testwerten durchgeführt werden.

Bei einer nochmals weiteren Ausführungsform des Testverfahrens sind oder werden eine Mehrzahl von Testfällen oder eine Mehrzahl Testfällen und jeweils zugehörige Testfallskripte zu einem wiederverwendbaren Testmodul zusammengefasst. Solche Testmodule erlauben in besonders einfacher Art und Weise eine Archivierung von verwendeten Testfällen oder Testfällen und zugehörigen Testfallskripten. Darüber hinaus erlauben solche Testmodule eine spätere erneute Durchführung von bereits angewandten Tests und/oder deren Verwendung für andere Automatisierungslösungen.

Bei einer besonderen Ausführungsform des Testverfahrens ist vorgesehen, dass Testfälle mittels eines Testfall-Generators automatisch aus bestehenden Datenquellen, insbesondere sogenannten Audit Trails, generiert werden. Die automatische Generierung von Testfällen führt zu einem nochmals deutlich reduzierten Aufwand im Zusammenhang mit dem Testen einer Automatisierungslösung. Die automatische Generierung von Testfällen auf Basis von zum Beispiel Audit Trails erlaubt dabei die Verwendung von realen Werten als Testwerte und damit die Verwendung von plausiblen und realistischen Testwerten. Schließlich ist im Rahmen einer automatischen Generierung von Testfällen auf Basis solcher oder ähnlicher Datenquellen auch besonders leicht eine automatische Variation solcher plausibler und realistischer Testwerte möglich.

Der Anlagensimulator, der Test-Controller und das transaktionale HMI-Modell sind in Software ausgeführt, so dass die Erfindung auch ein die Funktionalität des Anlagensimulators, des Test-Controllers und des transaktionalen HMI-Modells umfassendes Computerprogramm, gegebenenfalls in Form eines verteilten Computerprogramms, ist, nämlich ein Computerprogramm mit Programmcodemitteln, um alle Schritte des hier beschriebenen Verfahrens und ggf. des Verfahrens in Form einzelner Ausgestaltungen oder in Form einer Kombination mehrerer Ausgestaltungen durchzuführen, wenn das Computerprogramm auf einem selbst als Anlagensimulator fungierenden Computer zum automatischen Testen einer in ein Automatisierungssystem geladenen Automatisierungslösung ausgeführt wird.

Schließlich ist die Erfindung auch ein System mit einem Automatisierungssystem und einem kommunikativ damit verbundenen Anlagensimulator, wobei in einen Speicher des Automatisierungssystems als Automatisierungslösung ein Steuerungsprogramm geladen ist, wobei der Anlagensimulator unter Verwendung mindestens eines vorgegebenen Testfalls sowie unter Verwendung eines Anlagenmodells, eines Test-Controllers und eines zur Nachbildung von Interaktionen eines Operators mit der Automatisierungslösung bestimmten transaktionalen HMI-Modells den Testfall abarbeitet, wobei das Steuerungsprogramm instrumentierte Funktionsbausteine umfasst, wobei als Instrumentierung Mittel zur Erfassung einer Testabdeckung während der Abarbeitung des Testfalls fungieren und wobei mittels des Anlagensimulators und des Testcontrollers eine jeweils resultierende Testabdeckung ermittelbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Anordnung zum Testen von Steuerungsprogrammen,
- FIG 2: eine Ausführungsform eines für den Test einer Automatisierungslösung und zumindest eines davon umfassten Steuerungsprogramms vorgeschlagenen Systems in Form eines schematisch vereinfachten Objektmodells, wobei das System einen Anlagensimulator, einen Test-Controller, ein transaktionales HMI-Modell, einen im Rahmen des Tests ausgeführten Testfall sowie zur Erfassung einer Codeabdeckung in dem zu testenden Steuerungsprogramm instrumentierte Funktionsbausteine umfasst,
- FIG 3: eine zur Erfassung einer Testabdeckung während der Abarbeitung des Testfalls vorgesehene Instrumentierung der Programmcodeanweisungen eines Funktionsbausteins,
- FIG 4: einen bei der Abarbeitung eines Testfalls resultierenden Ablauf in Form eines Sequenzdiagramms,
- FIG 5: ein Testfallskript zu einen Testfall in Form eines UML-Sequenzdiagramms,
- FIG 6: einen Auszug eines sogenannten Audit Trails aus einem Meldearchiv als Basis für im Rahmen eines Testfalls verwendbare Testwerte,
- FIG 7: einen Testfall-Generator zur automatischen Generierung von Testfällen und
- FIG 8: ein System zum Test von Steuerungsprogrammen gemäß dem hier vorgeschlagenen Ansatz.

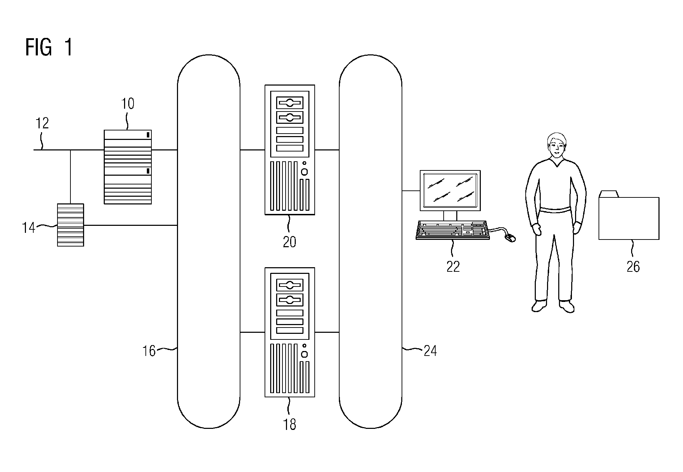

Die Darstellung in FIG 1 zeigt in schematisch vereinfachter Form eine Anordnung zum Test von Steuerungsprogrammen. Ein Automatisierungssystem 10, in dessen Speicher das zu testende Steuerungsprogramm oder zumindest ein zu testendes Steuerungsprogramm geladen ist, ist über einen Feldbus 12 eventuell mit weiteren Automatisierungssystemen 10 und dergleichen kommunikativ verbunden. Beim dargestellten Szenario ist über den Feldbus 12 jedenfalls eine Simulationsanschaltung 14 mit dem Automatisierungssystem 10 kommunikativ verbunden. Das Automatisierungssystem 10 und die Simulationsanschaltung 14 sind über einen Anlagenbus 16, zum Beispiel einem Industrial Ethernet Bus, für andere Kommunikationsteilnehmer erreichbar, nämlich einen Anlagensimulator 18 und einen Server 20. Ein als Client 22 fungierendes Gerät, zum Beispiel ein Programmiergerät oder dergleichen, ist über einen lokalen Bus 24 mit dem Anlagensimulator 18 und dem Server 20 kommunikativ verbunden. Mittels des Clients 22 kann ein Tester zum Testen des Automatisierungssystems 10 und des zumindest einen Steuerungsprogramms Testfälle 26 in Bezug auf das Automatisierungssystem 10 und dessen Steuerungsprogramm(e) abarbeiten. Ein derartiger Test wird im Folgenden als Testen einer Automatisierungslösung oder kurz als Testen der Automatisierung bezeichnet, denn das Automatisierungssystem 10 und das zumindest eine darauf ablaufende Steuerungsprogramm sind zur Automatisierung eines hier nicht gezeigten technischen Prozesses vorgesehen.

Ein derartiges Testen einer Automatisierungslösung mit den implementierten Bestandteilen des jeweiligen Steuerungsprogramms, also zum Beispiel Funktionsbausteinen, Funktionen usw., ist ein wichtiger und aufwändiger Prozessschritt für die Übergabe der projektierten Automatisierungslösung an einen jeweiligen Endkunden. Trotz des großen zeitlichen Aufwands und der damit verbundenen Kosten ist eine sogenannte Testabdeckung meist aber nur gering, da die Anzahl der verfügbaren Testfälle 26 und der zeitliche Rahmen für deren Anwendung begrenzt sind. Darüber hinaus sind solche auf einer manuellen Abarbeitung von vorgegebenen Testfällen 26 basierende Tests oft nur bedingt reproduzierbar, da sie zum Beispiel vom Reaktionsvermögen des Testers und/oder den jeweiligen Initialzuständen des Automatisierungssystems 10 abhängig sind.

Wie eingangs erwähnt, wird ein derartiges manuelles Testen der Automatisierung auf Basis vorgegebener Testfälle 26 meist als sogenannter FAT (Factory Acceptance Test) oder SAT (Site Acceptance Test) durchgeführt. Der Test wird dabei erst zu einem sehr späten Zeitpunkt im Engineering durchgeführt. Für den Test müssen zum Beispiel Anlagenbilder oder dergleichen für das Bedienen und Beobachten projektiert sein und mittels eines Servers 20 bereitgestellt werden. Eine Möglichkeit für einen effizienten Test eines oder mehrerer Steuerungsprogramme ist häufig erst gegeben, wenn auch große Teile des Leitsystems fertiggestellt sind. Ein umfangreicher Test in frühen Projektierungsphasen ist dagegen nur bedingt möglich.

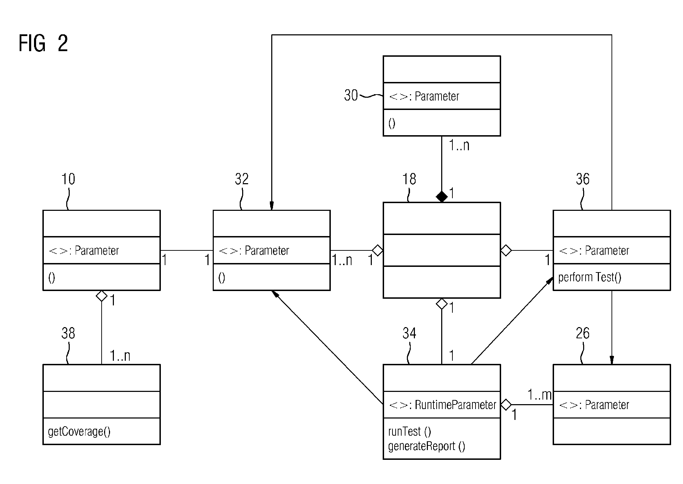

Die Darstellung in FIG 2 zeigt in Form eines schematisch vereinfachten Objektmodells den hier für den Test einer Automatisierungslösung und zumindest eines davon umfassten Steuerungsprogramms vorgeschlagenen Ansatz. Das Automatisierungssystem 10 ist links gezeigt. In einen nicht dargestellten Speicher des Automatisierungssystems 10 ist in an sich bekannter Art und Weise zumindest ein zu testendes Steuerungsprogramm geladen. Weil es bei dem hier vorgestellten Ansatz auf die Hardware des Automatisierungssystems 10 nicht oder zumindest nicht wesentlich ankommt, können für die weitere Beschreibung das Automatisierungssystem 10 und dessen Steuerungsprogramm(e) als ein und dieselbe Funktionseinheit aufgefasst werden. Im Interesse einer besseren Lesbarkeit der Beschreibung wird diese, aber ohne Verzicht auf eine weitergehende Allgemeingültigkeit, anhand genau eines Steuerungsprogramms fortgesetzt, obwohl eine Automatisierungslösung häufig eine Mehrzahl von Steuerungsprogrammen umfasst. Immer dann, wenn von einem Steuerungsprogramm die Rede ist, ist folglich auch die Möglichkeit einer Mehrzahl von Steuerungsprogrammen stets mitzulesen. Dies gilt entsprechend auch für andere im Singular benutzte Ausdrücke, zu Beispiel Testfall 26, Anlagenmodell 30 und so weiter.

Auch für einen Test einer Automatisierungslösung nach dem hier vorgeschlagenen Ansatz wird ein Anlagensimulator 18 verwendet. Auch hier wird, wie bei dem Automatisierungssystem 10 und dessen Steuerungsprogramm, eine identische Bezeichnung für die jeweilige Hardware und die auf dieser ablaufende Software verwendet. Dies gilt im Folgenden auch ohne entsprechenden Hinweis für weitere Funktionseinheiten. Der Anlagensimulator 18 nutzt die im Folgenden beschriebenen Komponenten oder ist um diese erweitert. Der Anlagensimulator 18 nutzt einerseits zumindest ein Anlagenmodell 30 von Prozessen oder Teilprozessen des mit dem zu testenden Steuerungsprogramm jeweils zu automatisierenden technischen Prozesses. Das Anlagenmodell 30 simuliert das Verhalten des zu automatisierenden technischen Prozesses und/oder eines Anlagenteils. Mittels einer Kopplung 32 (AS-Kopplung) kann der Anlagensimulator 18 mit der Automatisierung, nämlich dem Automatisierungssystem 10 und dessen Steuerungsprogramm, interagieren. Dazu gehören ein Austausch von Prozesswerten oder das Tätigen von HMIrelevanten Eingaben, wie zum Beispiel das Setzen eines Stellwerts und dergleichen.

Dem Anlagensimulator 18 ist ein Test-Controller 34 zugeordnet oder der Anlagensimulator 18 umfasst einen solchen Test-Controller 34. Dieser steuert die Abarbeitung der Testfälle 26 und lädt ein transaktionales HMI-Modell 36. Das transaktionale HMI-Modell 36 dient als abstrakte Testschnittstelle für HMI-relevante Interaktionen mit dem Automatisierungssystem 10. Der Test-Controller 34 verwaltet alle Testfälle 26 und steuert, überwacht und koordiniert deren Ausführung. Auf Seiten des Automatisierungssystems 10 wird bei der Abarbeitung eines Testfalls 26 das aus einem oder mehreren Funktionsbausteinen 38 bestehende Steuerungsprogramm ausgeführt.

Ein Testfall 26 wird abgearbeitet, indem der Test-Controller 34 die Testfälle 26 verwaltet und jeweils einen Testfall 26 dem transaktionalen HMI-Modell 36 zuweist. Das transaktionale HMI-Modell 36 arbeitet dann den Testfall 26 ab. Ist ein Testfall 26 abgearbeitet worden, ist gemäß dem hier vorgeschlagenen Ansatz vorgesehen, dass mittels des Test-Controllers 34 für statistische Auswertungen und dergleichen eine Testabdeckung (Code Coverage) der hierfür instrumentierten Funktionsbausteine 38 über die Kopplung 32 aus dem Automatisierungssystem 10 auslesbar ist und dass der Test-Controller 34 im Rahmen des Tests und zu dessen Dokumentation entsprechende Daten aus dem Automatisierungssystem 10 ausliest. Auf Basis der dabei erhaltenen Daten wird durch den Test-Controller 34 ein Bericht erzeugt. Im Zusammenhang damit oder anschließend wird der nächste Testfall 26 zur Ausführung ausgewählt, insbesondere automatisch ausgewählt, und anschließend ausgeführt. Eine Beschreibung eines Testfalls 26 kann mit verschiedensten Mitteln erfolgen, zum Beispiel unter Verwendung einer formalen Beschreibungssprache wie UML (Unified Modelling Language).

Zur Erfassung der Testabdeckung ist vorgesehen, dass die im Folgenden zusammenfassend als Funktionsbaustein 38 bezeichneten Funktionen und Funktionsbausteine als Instrumentierung für die Erfassung der Testabdeckung (instrumentierte Funktionsbausteine 38) eine Schnittstelle aufweisen, die es dem Test-Controller 34 ermöglicht, nach einem Test die Abdeckung des von dem Funktionsbaustein 38 umfassten Programmcodes abzufragen. Als Instrumentierung wird in der Softwareentwicklung bekanntlich das Anreichern eines Quellcodes mit Zusatzinformationen bezeichnet, welche eine Untersuchung des Verhaltens des jeweiligen Computerprogramms ermöglichen.

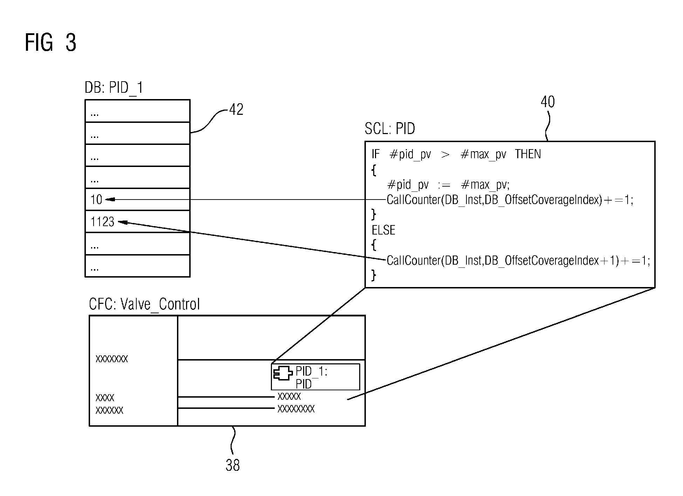

Die Darstellung in FIG 3 zeigt beispielhaft die Instrumentierung der Programmcodeanweisungen eines Funktionsbausteins 38, hier in Form eines SCL-Codes 40, zur Ermittlung der Codeabdeckung durch einen Testfall 26. Danach werden die Programmcodeanweisungen, hier der SCL-Code 40, um Funktionen, insbesondere Funktionsaufrufe, ergänzt, mit deren Hilfe zum Beispiel ein Zähler in einem zugehörigen Instanz-Datenbaustein 42 bei jedem Durchlauf inkrementiert wird. Die als Instrumentierung fungierende Funktion ist dabei so implementiert, dass diese nur während eines Tests oder während einer Simulation, nicht aber während des produktiven Betriebs ausgeführt wird. Nach dem Durchlauf eines Testfalls 26 kann der Test-Controller 34 die gesamte Codeabdeckung des Steuerungsprogramms durch das Auslesen des oder jedes jeweils beeinflussten Zählers, insbesondere durch Auslesen der Instanz-Datenbausteine 42, über die Kopplung 32 ermitteln und für einen Bericht aufarbeiten.

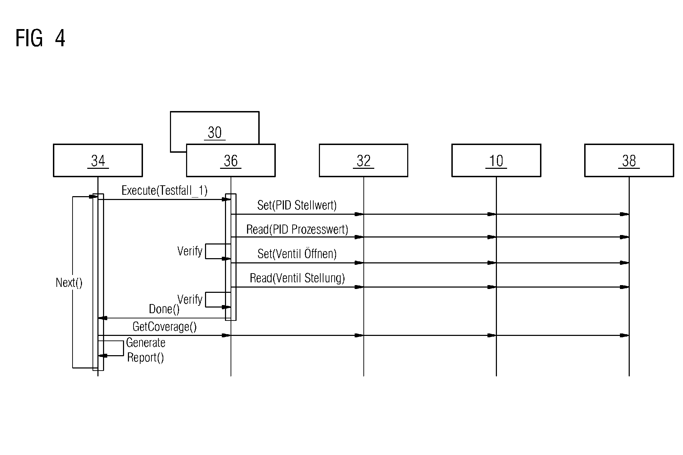

Die Darstellung in FIG 4 zeigt diesen Ablauf beispielhaft in Form eines Sequenzdiagramms. Die projektierten und instrumentierten Funktionsbausteine 38 der zu testenden Automatisierung (Model Under Test) werden für den Test in das mit dem Anlagensimulator 18 gekoppelte reale oder virtuelle Automatisierungssystem 10 geladen und mittels des Anlagenmodells 30 sowie mittels des transaktionalen HMI-Modells 36 für den Test stimuliert.

In der Darstellung ist dies symbolisch in Form eines Aufrufs eines Testfalls 26 durch den Test-Controller 34 gezeigt: "Execute(Testfall_1)". Der aufgerufene Testfall 26 umfasst zum Beispiel die Vorgabe eines Stellwerts eines PID-Algorithmus. Diese Vorgabe erfolgt mittels des transaktionalen HMI-Modells 36 oder mittels des Anlagenmodells 30 und des transaktionalen HMI-Modells 36: "Set(PID Stellwert)". Mittels der Kopplung 32 gelangt die simulierte Bedienhandlung zum Automatisierungssystem 10 und bewirkt dort den Aufruf des instrumentierten Funktionsbausteins 38. In der vorangehend beschriebenen FIG 3 war ein Beispiel gezeigt, wie diese Instrumentierung ausgeführt sein kann. Anschließend wird im gezeigten Beispiel ein Prozesswert der PID-Regelung gelesen: "Read(PID Prozesswert"). Im Anschluss daran kann eine Überprüfung vorgesehen sein, zum Beispiel ob der vorgegebene Stellwert eingestellt wurde oder ob der gelesene Prozesswert im Bereich eines Erwartungswerts liegt: "Verify". Im Weiteren wird bei dem gezeigten Beispiel mittels des transaktionalen HMI-Modells 36 eine Bedienhandlung simuliert, die das Öffnen eines Ventils bewirken soll: "Set(Ventil Öffnen)". Anschließend wird die resultierende Stellung des Ventils ermittelt: "Read(Ventil Stellung)". Anhand der resultierenden Ventilstellung kann ermittelt werden, ob der vorangehende Befehl zum Öffnen des Ventils korrekt ausgeführt wurde: "Verify". Im dargestellten Beispiel ist der Testfall 26 damit beendet: "Done()". Im Anschluss an die Beendigung des Testfalls 26 wird die Codeabdeckung ermittelt: "GetCoverage()". Wiederum im Anschluss daran - oder auch zu einem anderen geeigneten Zeitpunkt - wird ein Bericht zur ermittelten Codeabdeckung generiert: "Generate Report()". Wiederum im Anschluss daran oder auch unabhängig von der Generierung des Berichts kann die Abarbeitung des nächstfolgenden Testfalls 26 erfolgen: "Next()".

Je nach Testfall 26 werden unterschiedliche Code-Bereiche jedes entsprechend der Darstellung in FIG 3 instrumentierten Funktionsbausteins 38 häufig oder weniger häufig durchlaufen. Die Ermittlung der Codeabdeckung ist ein Maß für die Qualität des jeweils entsprechend eines Testfalls 26 oder mehrerer Testfälle 26 ausgeführten Tests.

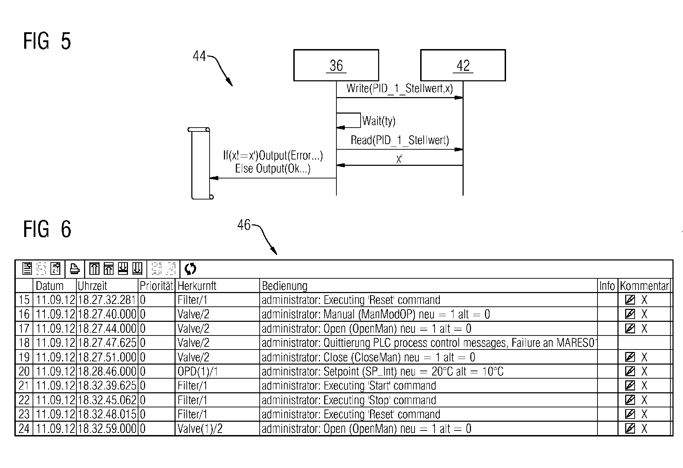

Die Erweiterung des Anlagensimulators 18 um ein transaktionales HMI-Modell 36 dient der automatisierten und reproduzierbaren Nachbildung von Interaktionen eines Operators mit der Automatisierung, also dem Automatisierungssystem 10 und dem damit ausgeführten Steuerungsprogramm sowie dem Anlagenmodell 30 oder ggf. dem jeweils automatisierten technischen Prozess, nämlich Interaktionen, wie sie zum sogenannten Bedienen und Beobachten gehören. Die mittels des transaktionalen HMI-Modells 36 automatisierten Interaktionen erfolgen ohne Verwendung von Anlagenbildern oder dergleichen, die in einer frühen Projektierungsphase, in der nach dem hier vorgeschlagenen Ansatz bereits ein Test möglich wird, oftmals nicht zur Verfügung stehen. Das transaktionale HMI-Modell 36 ermöglicht das wiederholte und automatisierte Testen. Das transaktionale HMI-Modell 36 generiert HMI-relevante Bedieneingaben zur Stimulation der Automatisierung. Beispiele dafür sind vorangehend bereits im Zusammenhang mit der Erläuterung der Darstellung in FIG 4 genannt worden, zum Beispiel "Ändere Stellwert des PID-Reglers zur Füllstandsüberwachung eines Tanks" ("Set(PID Stellwert)"). Bei der Ausführung des Testfalls 26 wird hierzu zum Beispiel auf die relevanten Einträge des jeweiligen Instanz-Datenbausteins 42 zugegriffen. Solche Zugriffe können zum Beispiel durch Testfallskripte 44 (FIG 5), die mittels des Anlagensimulators 18 abgearbeitet werden, realisiert werden.

Testfälle 26 können in Form manuell programmierter oder aus anderen Beschreibungsquellen generierter Testfallskripte 44 realisiert werden. Die Darstellung in FIG 5 zeigt ein Testfallskript 44 zu einem Testfall 26 in Form eines UML-Sequenzdiagramms. UML (Unified Modelling Language) stellt bekanntlich eine formale Spezifikationssprache dar, die über entsprechende Generatoren in unterschiedliche Implementierungssprachen abgebildet werden kann und damit auch als Basis für Skripte, hier Testfallskripte 44, in Betracht kommt.

Das Sequenzdiagramm zeigt, wie durch das transaktionale HMI-Modell 36 zunächst ein Stellwert x eines Reglerbausteins in einem Automatisierungssystem 10 ein einem jeweiligen Instanz-Datenbaustein 42 geändert wird: "Write(PID_1_Stellwert,x)". Nach Abwarten einer definierten Zeitspanne ("Wait(ty)") wird durch Rücklesen aus dem betreffenden Instanz-Datenbaustein 42 geprüft, ob der Stellwert auch tatsächlich im Automatisierungssystem 10 gesetzt worden ist: "Read(PID_1_Stellwert)". Auf den Lesebefehl wird der Wert x' zurückgeliefert. Wenn der zurückgelesene Wert x' nicht dem zuvor gesetzten Wert x entspricht, wird in den ansonsten Informationen zur Testabdeckung umfassenden Bericht eine Fehlermeldung eingefügt: "Output(Error...)". Ansonsten wird in den Bericht eine Meldung eingefügt, die anzeigt, dass der in den Instanz-Datenbaustein 42 geschriebene Wert korrekt wieder aus diesem zurückgelesen werden konnte: "Output(Ok...)". Ganz links in der Darstellung in FIG 5 ist insoweit symbolisch der automatisch generierte Bericht gezeigt. Selbstverständlich können auch komplexere Szenarien abgebildet werden, zum Beispiel ein Setzen eines Stellwerts und ein Beobachten durch mehrfaches Rücklesen aus dem jeweiligen Instanz-Datenbaustein 42, ob ein Prozesswert innerhalb einer definierten Zeit und Güte einen eingestellten Wert erreicht, usw.

Die Testfälle 26 beinhalten die Stimulation des Steuerungsprogramms aus HMI-Sicht inklusive der erwarteten Reaktionen (funktional und zeitlich) aus dem Automatisierungssystem 10. Mittels eines zu einem Testfall 26 gehörigen Testfallscripts 44 ist auch eine Variation von darin definierten Testwerten möglich, so dass eine Schar von Parameter-Tupeln verwendet werden kann und die jeweils resultierenden Reaktionen geprüft werden können. Nach Ablauf jeweils eines Testfalls 26 kann über die erwähnten instrumentierten Funktionsbausteine 38 geprüft werden, welches Maß an Codeabdeckung in der jeweiligen Automatisierungsfunktion erreicht worden ist.

Zur Verbesserung der Codeabdeckung können demnach neben der Erstellung von neuen Testfällen 26 auch Parametervariationen oder Variationen von Parametervariationen herangezogen werden. Für einen Funktionsbaustein 38 erstellte Testmodule mit einer Mehrzahl von Testfällen 26 können bei neuen Instanzen des Funktionsbausteins 38 wieder verwendet werden. Dieses Vorgehen sichert eine sukzessiv verbesserte Testabdeckung des Codes. Selbstverständlich können derartige Testmodule auch bei neuen Instanzen des Funktionsbausteins 38 einer späteren anderen Automatisierung verwendet werden und stehen dort dann unmittelbar, also ohne zusätzlichen Entwicklungsaufwand, zur Verfügung.

Ein weiterer Ansatz zur Generierung von Testfällen 26 ist das Hinzuziehen von bestehenden Datenquellen aus bereits projektierten Anlagen. Heutige Leitsysteme verfügen zum Beispiel über die Möglichkeit der Erzeugung eines sogenannten Audit Trails 46 (FIG 6). Solche Audit Trails sind dort besonders wichtig, wo durch Bedieneingriffe eines Benutzers produktionsrelevante Daten während des normalen Betriebs erzeugt, geändert oder gelöscht werden. Diese Bedieneingriffe werden automatisch in Meldearchiven protokolliert, wobei alle Ereignisse (alter Wert, neuer Wert, Benutzer-ID, Datums- und Zeitstempel, Operation und/oder Chargenname usw.) erfasst sind. Die Darstellung in FIG 6 zeigt einen exemplarischen Auszug eines Audit Trails 46 aus einem Meldearchiv. Im Kontext der Generierung von Testfällen 26 können ein solcher Audit Trail 46 oder vergleichbare Daten genutzt werden, um daraus beispielsweise HMI-relevante Testfallskripte 44 ableiten zu können.

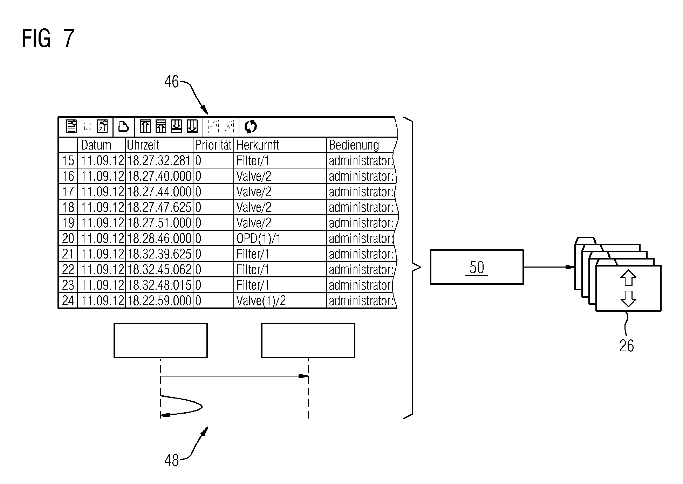

Dazu zeigt die Darstellung in FIG 7 exemplarisch, wie auf Basis von Audit Trails 46 oder dergleichen, zum Beispiel UMLkonformen Sequenzdiagrammen 48, mittels eines nach Art eines regelbasierten Compilers und oder eines Protokoll-Umsetzers fungierenden Testfall-Generators 50 automatisch Testfälle 26 und oder Testfallskripte 44 erzeugt werden können, die mittels eines transaktionalen HMI-Modells 36 (FIG 2) abgearbeitet werden können.

Aufgrund der Abarbeitung eines Testfalls 26 und/oder auf Basis eines dabei generierten Berichts lassen sich automatisch Berichte generieren, welche auf Basis von bei der Ausführung der Testfälle 26 resultierenden analogen und dynamischen Signalen nicht nur eine "in Ordnung"-/"nicht in Ordnung"-Charakteristik aufweisen, sondern darüber hinaus auch Größen wie Totzeit, Varianz, Mittelwert, gleitender Mittelwert, Stichprobenvarianz und dergleichen. Aufgrund einer Varianz der Eingabeparameter über entsprechende Testfallskripte 44 ist eine solche Verteilungsauswertung möglich.

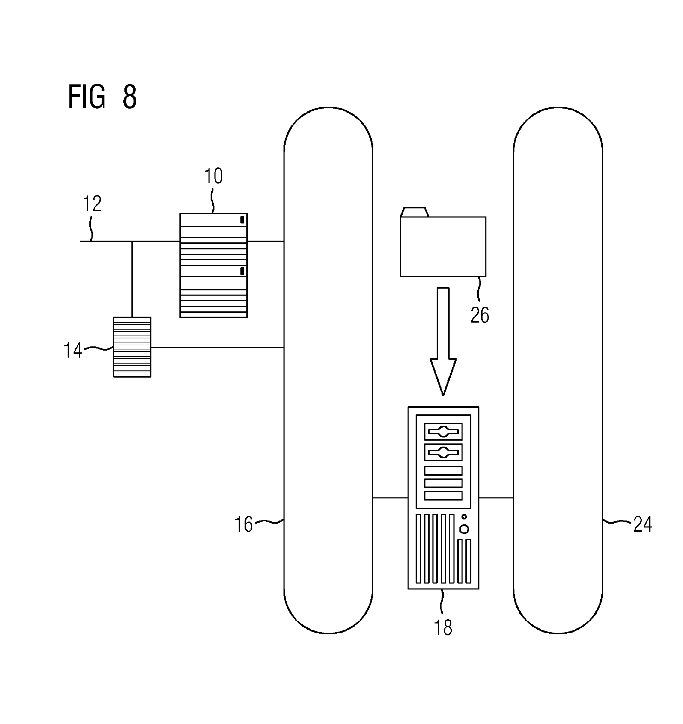

Mit dem hier vorgestellten Ansatz ergibt sich im Vergleich zu dem bisherigen System (FIG 1) ein wesentlich einfacherer und effizienterer Testaufbau, zum Beispiel ein Testaufbau in Form eines Systems, wie dieses schematisch vereinfacht in der Darstellung in FIG 8 gezeigt ist. Es können deutlich tiefgreifendere und reproduzierbarere Tests gefahren werden. Bereits während einer frühen Projektierungsphase und danach kontinuierlich, zum Beispiel "über Nacht", kann das Engineering einer Anlage, also das Automatisierungssystem 10 und das davon ausgeführte Steuerungsprogramm, stetig geprüft werden. Am Ende des Engineering-Prozesses ist eine vollständige und automatisiert ablaufende Prüfung möglich. Die jeweils entstehenden Testfälle 26, Testfallskripte 44 und/oder Testmodule können für andere Anlagen oder im Falle einer späteren Änderung der geprüften Anlage selbstverständlich auch für die geänderte Anlage (Reengineering) verwendet werden, da auch bei anderen Anlagen, zumindest aber bei der geänderten Anlage, die jeweiligen Steuerungsprogramme auf ähnlichen Automatisierungsfunktionen und Funktionsbausteinen 38 basieren.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren und ein System zur Ausführung des Verfahrens zum automatischen Testen einer in ein Automatisierungssystem (10) geladenen Automatisierungslösung mittels eines Anlagensimulators (18). Innerhalb des Systems fungiert auch eine Hardwarekomponente, nämlich ein Computer oder dergleichen, als Anlagensimulator (18), indem der in Software ausgeführte Anlagensimulator (18) dort ausgeführt wird. Der Anlagensimulator (18) umfasst einen Test-Controller (34). Der Test-Controller (34) steuert ein zur Nachbildung von Interaktionen eines Operators mit der Automatisierungslösung bestimmtes transaktionales HMI-Modell (36). Dieses verwendet einen vorgegebenen Testfall (26) und dieser wird mittels des Test-Controllers (34) und des transaktionalen HMI-Modells (36) abgearbeitet. Auf Seiten des Automatisierungssystems (10) umfasst ein Steuerungsprogramm als Bestandteil der jeweiligen Automatisierungslösung instrumentierte Funktionsbausteine (38) und die instrumentierten Funktionsbausteine (38) weisen als Instrumentierung Mittel zur Erfassung einer Testabdeckung während der Abarbeitung des Testfalls (26) auf.

### Bezugszeichenliste

- 10: Automatisierungssystem
- 12: Feldbus
- 14: Simulationsanschaltung
- 16: Anlagenbus
- 18: Anlagensimulator
- 20: Server
- 22: Client
- 24: Bus
- 26: Testfall
- 28: --
- 30: Anlagenmodell
- 32: Kopplung
- 34: Test-Controller
- 36: HMI-Modell
- 38: Funktionsbaustein
- 40: SCL-Code
- 42: Instanz-Datenbaustein
- 44: Testfallskript
- 46: Audit Trail
- 48: Sequenzdiagramm
- 50: Testfall-Generator

## Patentansprüche

1. Verfahren zum automatischen Testen einer in ein Automatisierungssystem (10) geladenen Automatisierungslösung mittels eine Anlagensimulators (18), wobei
- der Anlagensimulator (18) einen Test-Controller (34) umfasst,
- der Test-Controller (34) ein zur Nachbildung von Interaktionen eines Operators mit der Automatisierungslösung bestimmtes transaktionales HMI-Modell (36) steuert,
- das transaktionale HMI-Modell (36) jeweils einen vorgegebenen Testfall (26) verwendet,
- mittels des Test-Controllers (34) und des transaktionalen HMI-Modells (36) der jeweilige Testfall (26) abgearbeitet wird,
- ein Steuerungsprogramm als Bestandteil der jeweiligen Automatisierungslösung instrumentierte Funktionsbausteine (38) umfasst und
- die instrumentierten Funktionsbausteine (38) als Instrumentierung Mittel zur Erfassung einer Testabdeckung während der Abarbeitung des Testfalls (26) umfassen.

2. Verfahren nach Anspruch 1, wobei nach Abschluss der Abarbeitung des jeweiligen Testfalls (26) automatisch ein Bericht zur erreichten Testabdeckung generiert wird.

3. Verfahren nach Anspruch 2, wobei der Bericht zur erreichten Testabdeckung auf Basis von aus dem Automatisierungssystem (10) ausgelesenen Daten generiert wird.

4. Verfahren nach einem der vorangehenden Ansprüche, wobei als Instrumentierung sowie als Mittel zur Ermittlung einer Testabdeckung ein Zähler sowie eine Anweisung zum Inkrementieren des Zählers fungieren und wobei der Zähler bei jedem die Anweisung einschließenden Durchlauf des instrumentierten Funktionsbausteins (38) inkrementiert wird.

5. Verfahren nach Anspruch 4, wobei der Zähler in einem jeweiligen Instanz-Datenbaustein (42) des instrumentierten Funktionsbausteins (38) angelegt ist.

6. Verfahren nach Anspruch 4 oder 5, wobei die Anweisung zum Inkrementieren des Zählers nur bei der Abarbeitung eines Testfalls (26) ausgeführt wird.

7. Verfahren nach einem der vorangehenden Ansprüche, wobei ein Testfall (26) eine Variation von darin definierten Testwerten umfasst.

8. Verfahren nach einem der vorangehenden Ansprüche, wobei eine Mehrzahl von Testfällen (26) oder Testfällen (26) und jeweils zugehörigen Testfallskripten (44) zu einem wiederverwendbaren Testmodul zusammengefasst werden oder zusammengefasst sind.

9. Verfahren nach einem der vorangehenden Ansprüche, wobei Testfälle (26) mittels eines Testfall-Generators (50) automatisch aus bestehenden Datenquellen generiert werden.

10. Computerprogramm mit Programmcodemitteln, um alle Schritte von jedem beliebigen der Ansprüche 1 bis 9 durchzuführen, wenn das Computerprogramm auf einem als Anlagensimulator (18) fungierenden Computer zum automatischen Testen einer in ein Automatisierungssystem (10) geladenen Automatisierungslösung ausgeführt wird.

11. System mit einem Automatisierungssystem (10) und einem kommunikativ damit verbundenen Anlagensimulator (18), wobei in einen Speicher des Automatisierungssystems (10) als Automatisierungslösung ein Steuerungsprogramm geladen ist, wobei der Anlagensimulator (18) unter Verwendung mindestens eines vorgegebenen Testfalls (26) sowie unter Verwendung eines Anlagenmodells (30), eines Test-Controllers (34) und eines zur Nachbildung von Interaktionen eines Operators mit der Automatisierungslösung bestimmten transaktionalen HMI-Modells (36) den Testfall (26) abarbeitet, wobei das Steuerungsprogramm instrumentierte Funktionsbausteine (38) umfasst, wobei als Instrumentierung Mittel zur Erfassung einer Testabdeckung während der Abarbeitung des Testfalls (26) fungieren und wobei mittels des Anlagensimulators (18) und des Test-Controllers (34) eine jeweils resultierende Testabdeckung ermittelbar ist.
